# EUROPEAN PATENT APPLICATION

(11) **EP 2 442 326 A2**
(43) Date of publication of application: **18.04.2012**
(21) Application number: 11184214.2
(22) Date of filing: 06.10.2011
(51) Int. Cl.: H01G 9/20

(54) **Method for enhancing the conversion efficiency of CdSe-quantum dot sensitized solar cells**

(30) Priority: 12.10.2010 US 902632
(71) Applicant: Honeywell International Inc., Morristown, NJ 07962-2245 (US)
(72) Inventor: Liu, Anna, Morristown, NJ New Jersey 07962-2245 (US); Zheng, Zhi, Morristown, NJ New Jersey 07962-2245 (US); Zhao, Linan, Morristown, NJ New Jersey 07962-2245 (US); Wang, Marilyn, Morristown, NJ New Jersey 07962-2245 (US)
(74) Representative: Buckley, Guy Julian

(57) **Abstract**

CdSe-quantum dots are formed on a TiO₂ patterned layer by chemical deposition from a solution of aminotriacetic acid/cadmium (NTA/Cd) and sodium selenosulfate. CdSe-quantum dots are useful as sensitizers for solar cells. The conversion efficiency of light of light power to electric power is enhanced by adjusting the ratio of potassium aminotriacetate to cadmium (NTA/Cd) as well as the chemical bath deposition (CBD) temperature and time.

## Description

### Field of the Invention

This invention relates to a method of preparing CdSe quantum dot sensitizers for solar cells and to CdSe quantum dots prepared by the method.

### Summary

A method of preparing cadmium selenide (CdSe) quantum dot sensitizers on a substrate comprises forming a titanium dioxide (TiO₂) layer on a substrate electrode; followed by forming quantum dots on the TiO₂ layer by a chemical deposition process. The chemical deposition process comprises exposing the TiO₂ coated layer to a solution of a metal complexing agent complexed with Cd and a selenium source for a period of time and at a temperature sufficient to form CdSe-quantum dots on the TiO₂ layer.

A device comprising TiO₂ layer on a substrate electrode comprises quantum dots on the TiO² layer that have been chemically deposited by exposing the TiO₂ coated layer to a solution of a metal complexing agent complexed with Cd and a selenium source for a period of time and at a temperature sufficient to form CdSe-quantum dots on the TiO₂ layer.

By varying the ratio between the metal, such as cadmium, and a complexing agent, such as aminotriacetic acid (NTA) or ethylenediaminetetraacetic acid (EDTA) and the time in the chemical bath deposition solution containing a selenium source the size of metal-Se quantum dot sensitizers , such as the CdSe-quantum dot sensitizers can be controlled.

The CdSe quantum dot sensitizers are useful for preparing solar cells.

### Brief Description of the Drawings

**Fig. 1** shows the absorption spectra of the Quantum dot-sensitized TiO₂ films prepared by chemical bath deposition at 30°C using different ratios of NTA/Cd solution for different periods of time.
**Fig. 2** shows the absorption spectra of the Quantum dot-sensitized TiO₂ films prepared by chemical bath deposition at 30°C using different ratios of NTA/Cd solution for the same periods of time.
**Fig. 3** shows the relationship between wavelength and chemical bath deposition time at an absorbance of 2.
**Fig. 4** shows the relationship between IPCE % at 520 nm and chemical bath deposition time, for three samples having different NTA/Cd ratios.
**Fig. 5** shows the relationship among chemical bath deposition time, short circuit current density (Jsc), and NTA/Cd ratio.
**Fig. 6** shows the relationship among conversion efficiency (h%), chemical bath deposition time, and the NTA/Cd ratio.
**Fig. 7** shows the relationship between wavelength and chemical bath deposition time at an Absorbance of 2.

### Definitions

The term CBD refers to chemical bath deposition.

The term Cd refers to the element cadmium or its cation Cd⁺².

The term DI water refers to deionized water

The term EC film refers to electroconductive films.

The term EDTA refers to ethylenediaminetetraacetic acid.

The term FF refers to the fill factor. Fill factor is defined as FF = (VₘIₘ)/(V_{oc}I_{sc}), where V_{oc} is the open-circuit voltage (when I = 0) and I_{sc} is the short-circuit current (when V = 0), and Vₘ and Iₘ are the voltage and current at optimal operation when the solar cell is operated under a condition that gives the maximum output power.

The term h% refers to the percent conversion of light power to electric power. The conversion efficiency of the solar cell h% is defined as the ratio of the generated maximum electric output power to the total power of the incident light Pᵢₙ: h = (VₘIₘ)/Pᵢₙ = V_{oc}I_{sc}FF/Pᵢₙ. From this equation, high Voc, Isc ,and FF are preferred for higher conversion efficiency

The term IPCE % refers to the incident photon to current conversion efficiency.

The term Jsc refers to short-circuit current density.

The term NH₄F refers to ammonium fluoride.

The term NTA refers to potassium aminotriacetate [N(CH₂COOK)₃]. NTA is a strong complexing agent for Cd²⁺ (and many other cations). It is also known as 2,2',2"-nitrilotriacetic acid.

The term QD refers to quantum dots. Quantum dots are semiconductors whose conducting characteristics are closely related to the size and shape of the individual crystal. Generally, the smaller the size of the crystal, the larger the band gap, the greater the difference in energy between the highest valence band and the lowest conduction band becomes, therefore more energy is needed to excite the dot, and concurrently, more energy is released when the crystal returns to its resting state. For example, in fluorescent dye applications, this equates to higher frequencies of light emitted after excitation of the dot as the crystal size grows smaller, resulting in a color shift from red to blue in the light emitted. An advantage in using quantum dots is that because of the high level of control possible over the size of the crystals produced, it is possible to have very precise control over the conductive properties of the material. (*See*, <http://en.wikipedia.org/wiki/Quantum_dot> Accessed 09/26/2010).

The term QDSSC refers to quantum dot sensitized solar cells.

### Detailed Description

In the following description, reference is made to the accompanying drawings that form a part hereof, and in which is shown by way of illustration specific embodiments which may be practiced. These embodiments are described in sufficient detail to enable those skilled in the art to practice the invention, and it is to be understood that other embodiments may be utilized and that structural, logical, and electrical changes may be made without departing from the scope of the present invention. The following description of example embodiments is, therefore, not to be taken in a limited sense, and the scope of the present invention is defined by the appended claims.

Inorganic quantum dots (QDs) have potential advantages over molecular dyes:
(1) They are capable of facile tuning of effective band gaps down to the infra-red (IR) region by changing their sizes and compositions,
(2) They have a higher stability and resistance toward oxygen and water over their molecular dye counterparts,
(3) They open up new possibilities for making multilayer or hybrid sensitizers; and
(4) They exhibit new phenomena such as multiple exciton generation and use of energy transfer-based charge collection as well as direct charge transfer schemes.

The huge interest in colloidal quantum dots and their applications over the past decade has imparted momentum to this research area. However, quantum dots have so far not succeeded as sensitizers in metal oxide solar cells, in part due to their low conversion efficiency of either liquid- or solid- type cells. One problem is that the photocurrent obtained is not high enough and the short-circuit current density (Jsc) is much lower than that of the organic dye-sensitized solar cells. To obtain higher energy convention efficiencies in quantum dot-sensitized QDSSC solar cells, the Jsc must be effectively enhanced first. Since the Jsc is closely related with the trap states of impurities and surface states of the quantum dots, a more perfect crystal state and suitable size of quantum dots are preferred.

Quantum dot preparation on mesoporous metal oxides (such as TiO₂) recently has focused on two approaches: (1) colloidal quantum dots capped with surface ligands have been attached to metal oxide surfaces through linker molecules or other attractive forces; and (2) quantum dots grown directly onto TiO₂ electrodes in chemical bath deposition (CBD) processes under normal or hydrothermal conditions. In the CBD approaches, dissolved cationic and anionic precursors are reacted slowly in one bath. The size of quantum dot is a function of nucleation rate and nucleus growth rate. Allowances are made for the varying activity of the quantum dots by adjusting the nucleation rate and nucleus growth rate. If deposition occurs too rapidly (or too slowly), parameters can be changed to slow down (or to speed up) the reaction [e.g., lower (or higher) selenosulphate concentration, higher (or lower) NTA:Cd ratio, lower (or higher) temperature]. The solution composition is important not only because the reaction rate increases with the concentrations of selenosulphate and/or Cd, but also even more so through the ratio between the NTA and Cd concentrations (the NTA/Cd ratio). The higher this ratio, the slower the reaction, since the free Cd²⁺ concentration is lower.

We have found a method to improve the conversion efficiency of CdSe-quantum dot sensitized solar cells by optimizing the NTA:Cd ratio. This method provides an improved CdSe-quantum dot than that obtained previously by adjusting the CBD temperature. The method results fewer impurity trap states and more perfect surface states which results in a higher short-circuit current density (Jsc).

We have found that by varying the ratio between the metal complexing agents, such as NTA and time in the chemical bath deposition solution the NTA/Cd the size of the quantum dots can be controlled. This allows adjusting the surface states and impurity trap states of the quantum dot sensitizers, to modulate the band gap, and achieve higher Jsc, resulting in higher conversion efficiency for the solar cell.

In one embodiment the invention provides a method of preparing CdSe quantum dot sensitizers on a substrate. The method comprises forming a TiO₂ layer on a substrate electrode; forming quantum dots on the TiO₂ layer by a chemical deposition process comprising; and exposing the TiO₂ coated layer to a solution of a metal complexing agent complexed with Cd and a selenium source for a period of time and at a temperature sufficient to form CdSe-quantum dots on the TiO₂ layer.

In one embodiment, the substrate electrodes are transparent and allow sunlight directly shine on the quantum dots.

In one embodiment, the solar cells include transparent glass electrodes, coated with fluorine-doped tin oxide (PET-ITO), aluminum-doped zinc oxide (PET-AZO), or tin-doped indium oxide (PET-ITO).

In one embodiment, the solar cells include transparent flexible electrodes, such as poly(ethylene terephthalate) coated with fluorine-doped tin oxide (PET-FTO), aluminum-doped zinc oxide (PET-AZO), tin-doped indium oxide (PET-ITO); or poly(ethylene naphthalate) coated with fluorine-doped tin oxide (PEN-FTO), aluminum-doped zinc oxide (PEN-AZO), tin-doped indium oxide (PEN-ITO). In one embodiment, the solar cells include non-transparent flexible electrodes such as Ti metal/stainless steel. Flexible electrodes present lower costs and technological advantages relative to glass-ITO electrodes, e.g. lower weight, impact resistance and less form and shape limitations.

In one embodiment, the temperature for the formation of the CdSe-quantum dots is between 5°C and 50°C. In one embodiment, a temperature of about 30°C is often useful. In one embodiment the time for the formation of the CdSe-quantum dots is between 100 and 280 minutes.

In one embodiment, the ratio of metal complexing agent to Cd is between 1 and 2. In another embodiment, the ratio of metal complexing agent to Cd is between 1.4 and 1.6.

In one embodiment, the metal complexing agent is potassium aminotriacetate. This complexing agent is also referred to herein as N(CH₂COOK)₃ or NTA.

### Example

CdSe-quantum dot sensitized solar cells were prepared as follows:

A patterned mesoscopic TiO₂ photoelectrode was formed on a conductive substrate from a TiO₂ paste with an acid additive. A small aliquot of TiO₂ suspension (with acid additive, for low temperature annealing) was spread onto the transparent electrode using a glass rod with adhesive tape (such as 3M® brand adhesive tape) as a spacer. After that, the electrodes are heated at 120°C for 20 minutes on a hotplate.

The mesoscopic TiO₂ film on a substrate such as an electroconductive thin film was immersed in NH₄F (1 M) (ammonium fluoride) solution for about 3-5 minutes, removed and washed with deionized (DI) water. Solutions of ratios of NTA/Cd between 1 and 2 were prepared using CdSO₄ with the concentration of Cd²⁺ at 0.2 M. Other soluble cadmium salts such as cadmium chloride (CdCl₂) or Cd(NO₃)₂ can be used if desired. Approximately 2 mL the thus prepared NTA/Cd solution and 2 mL of sodium selenosulphate solution (such Na₂SeSO₃ solution, 0.2 M) in 11 mL deionized water (DI water) were placed in a bottle. The NH₄F-treated electroconductive film was placed in the bottle, and the bottle was placed in a thermostated water bath. The water bath was at a temperature for the chemical bath deposition solution to synthesize and deposit CdSe-quantum dots onto the TiO₂ films and thereby sensitizing it. After a sufficient time for deposition of the CdSe quantum dot, the CdSe-quantum dot sensitized TiO₂ films were removed from the deposition solution, washed with DI, and immersed into NH₄F (1 M) solution for approximately 3-5 minutes). The samples were removed from the, NH₄F solution, washed with DI water, and allowed to dry. The samples were then dipped in to Zn(Ac)₂ (zinc acetate) solution and Na₂S (sodium sulfide) solution respectively for 1 min. This procedure was repeated twice to form a ZnS-shell (zinc sulfide-shell). Washing with DI water and drying afforded the photovoltaic electrode.

The electrodes were assembled with a cathode and filled with electrolyte to provide a quantum dot sensitized solar cell.

Transparent counter electrodes (CE) were prepared by sputter depositing a thin metal film such as a platinum film on to a substrate. The substrate may be solid such as glass, or flexible such as poly(ethylene terephthalate) or poly(ethylene naphthalate). In one embodiment, the counter electrode contains a pinhole. Counter electrodes may also be prepared by electrochemical deposition from chloroplatinic acid solution.

The device was then assembled into a sandwich type cell by pressing the counter electrode against the sensitized electrodes coated with quantum dots. Between the two electrodes, there is an adhesive tape, that is to say, sealed with a hotmelt gasket of 60 um thickness made of the ionomer Surlyn (DuPont). The heating temperature is about 100°C for 10 minutes. This is to control electrolyte film thickness and to avoid short-circuiting of the cell. The active area of the cells may be determined by the area of the hotmelt gasket. Surlyn® is a random copolymer poly(ethylene-co-methacrylic acid) (EMAA) in which the methacrylic acid groups have been neutralized with sodium ions (Na⁺).

The electrolyte and sealant are then injected. In one embodiment the electrolyte comprises a solution of a sulfide salt, sulfur, and an ionic conductor in in a mixture of water and an alcohol. A typical electrolyte solution comprises a solution of 1M Na₂S, 0.1M S, 0.2M KCl, in a mixture of pure water and methanol (volume ratio: 1:1). In one embodiment, a drop of the electrolyte put on a hole in the back of the counter electrode and the electrolyte is introduced into the cell via vacuum backfilling. Alternatively, the electrolyte can be introduced via a capillary using two holes in the n the back of the counter electrode. The hole(s) may also be in the gasket or in the photoelectrode. The hole may be sealed with a Surlyn layer or an epoxy.

The ratio between the NTA and Cd concentration is very important. The higher this ratio, the slower the reaction, since the free Cd²⁺ concentration is lower. The optimum value for this ratio depends, among other factors, on the deposition temperature. At higher temperatures, a higher NTA:Cd ratio is required to prevent too rapid reaction. As shown in TABLE I, the chemical bath depositions were carried out at 30°C for different times using various ratios of NTA/Cd solutions.

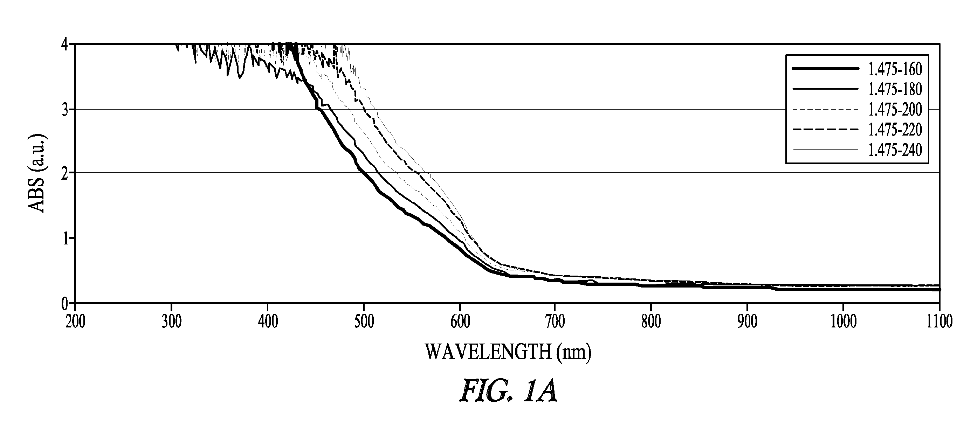

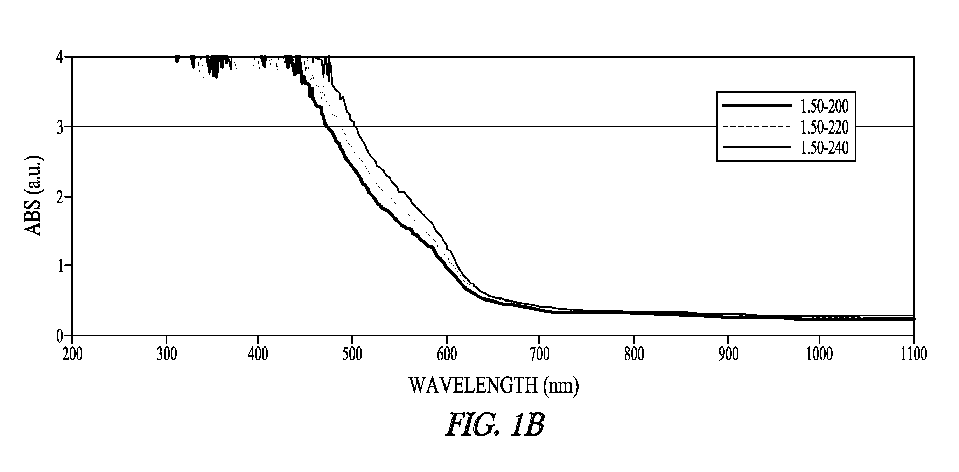

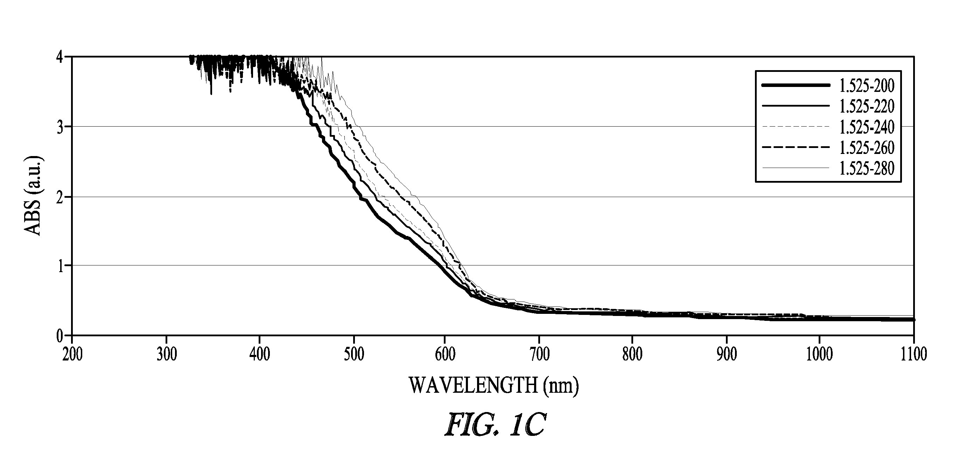

**Fig. 1** shows the absorption spectra of quantum dot-sensitized TiO₂ films prepared by chemical bath deposition at 30°C using different ratios of NTA/Cd solution for differing periods of time. The absorption edge is moved to longer wavelength with the increasing of chemical bath deposition time using any of the ratios of NTA/Cd solution.

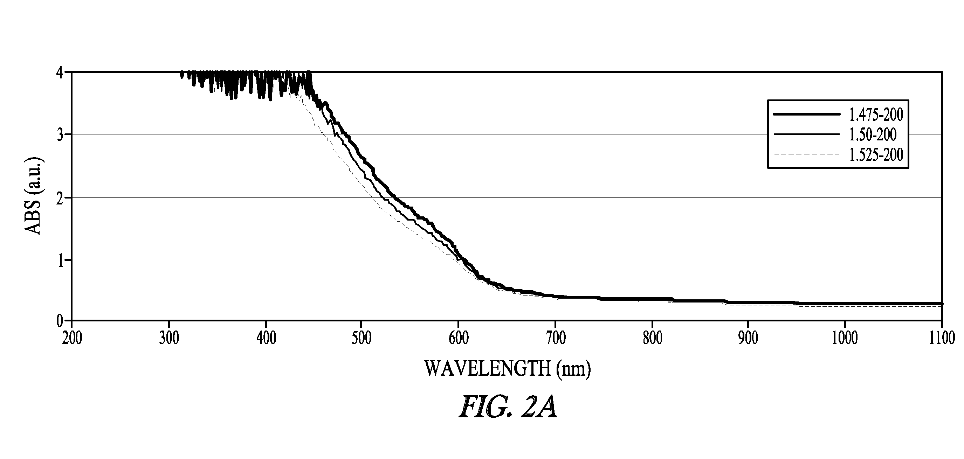

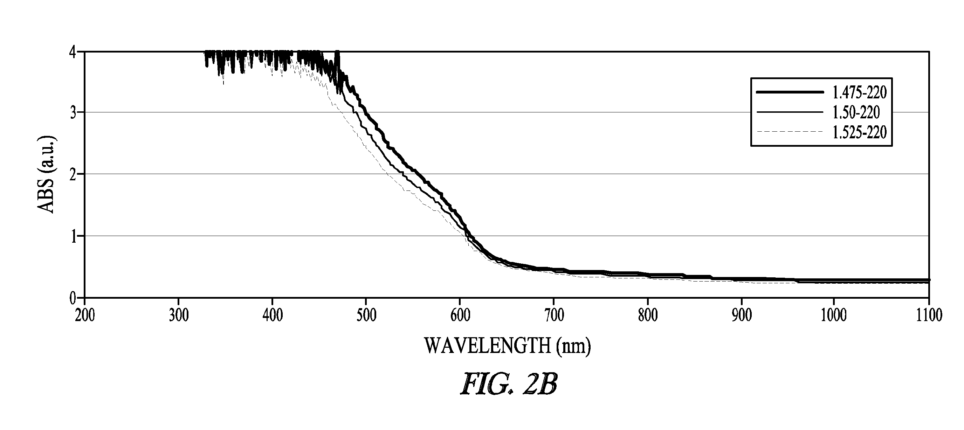

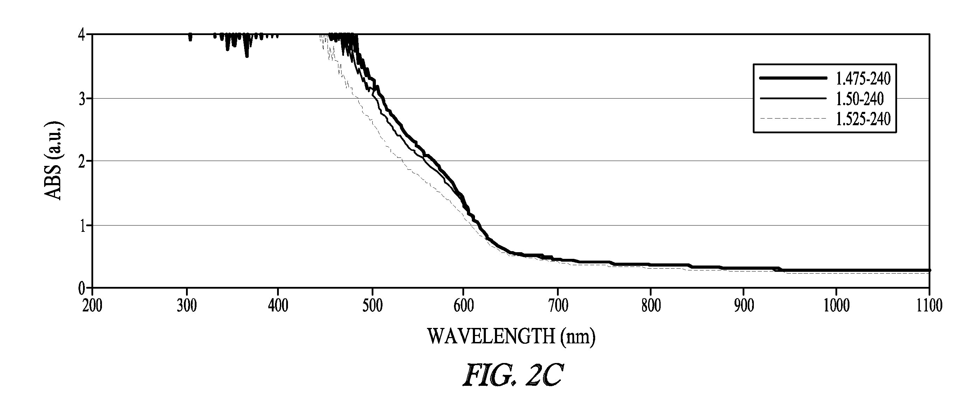

**Fig. 2** shows the absorption spectra of the Quantum dot-sensitized TiO₂ films prepared by chemical bath deposition at 30°C using different ratios of NTA/Cd solution for the same periods of time. An increase in the NTA/Cd ratio results in a blue shift of the absorption edge.

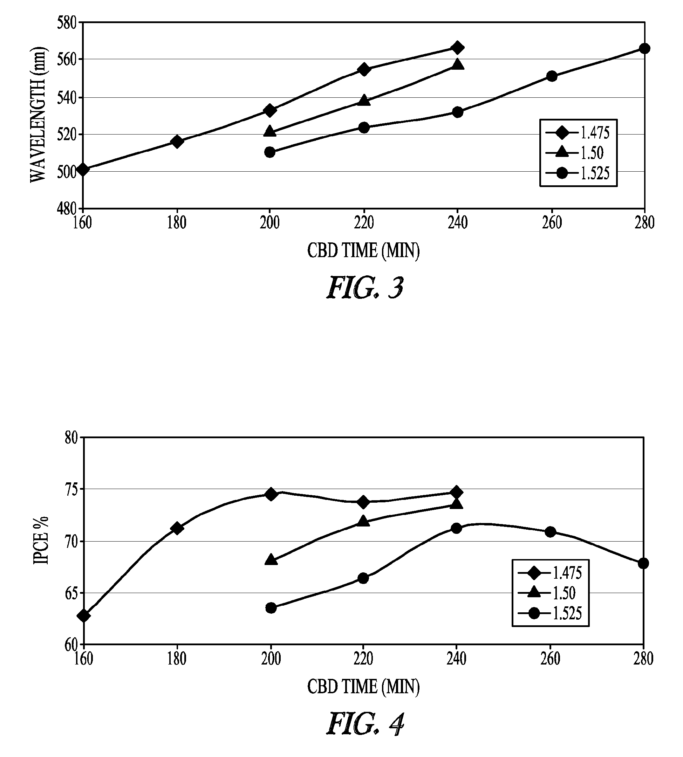

**Fig. 3** shows the relationship between wavelength and chemical bath deposition time at an absorbance of 2. The wavelength at an absorbance of 2 increases with increasing chemical bath deposition time. For samples prepared at the same chemical deposition time, the wavelength at which an absorbance of 2 occurs decreases with increasing NTA/Cd ratio.
**Fig. 4** shows the relationship between IPCE % at 520 nm and chemical bath deposition time, for three samples having different NTA/Cd ratios. For samples prepared with the same chemical bath deposition time, the IPCE % increases with decreasing the NTA/Cd ratio. This is in accord with the absorption spectrum, indicating that the reaction is accelerated by decreasing the ratio of NTA/Cd. The short circuit current density (Jsc) and conversion efficiency were both able to be modulated (*See*, TABLE II).

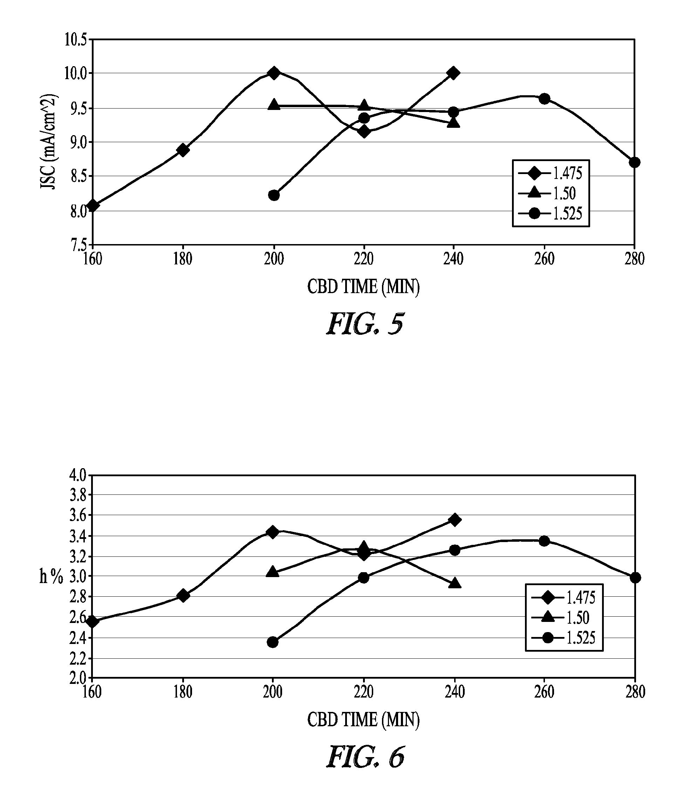

**Fig. 5** shows the relationship among chemical bath deposition time, short circuit current density (Jsc), and NTA/Cd ratio. By lengthening the chemical bath deposition time, a higher Jsc could be achieved for quantum dots having various NTA/Cd ratios.
**Fig. 6** shows the relationship among conversion efficiency (h%), chemical bath deposition time, and the NTA/Cd ratio. By lengthening the chemical bath deposition time and the adjusting the NTA/Cd ratio, a higher Jsc and h% can be achieved.

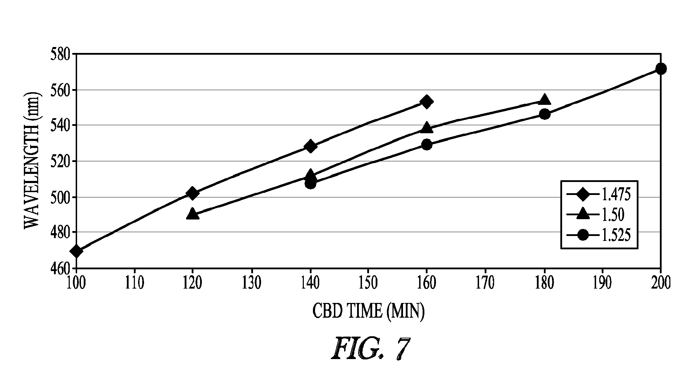

**Fig. 7** shows the relationship between wavelength and chemical bath deposition time at an Absorbance of 2. By lengthening the chemical bath deposition time, the wavelength at which an absorbance of 2 occurs increases. For samples prepared at the same chemical deposition time, the wavelength at which an absorbance of 2 occurs decreases with increasing NTA/Cd ratio. (*See*, TABLE III and TABLE IV).

The invention has been described in detail with particular reference to certain preferred embodiments thereof, but it will be understood that variations and modifications can be effected within the scope of the invention.

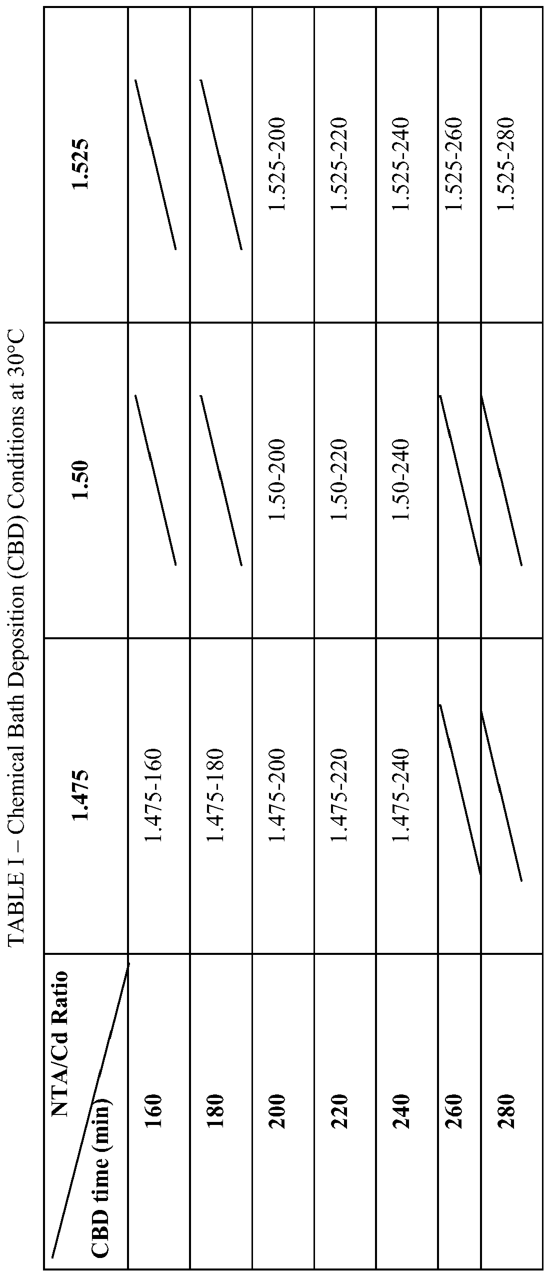

**TABLE II -I-V (current-voltage) testing for the cells - CBD Condition at 30°C**

| **Sample No.** | **Voc (V)** | **Jsc (mA/cm²)** | **FF** | **h (%)** |
|---|---|---|---|---|
| **1.475-160** | 0.6408 | 8.068582 | 0.468467 | 2.56% |
| **1.475-180** | 0.640146 | 8.868947 | 0.470733 | 2.82% |
| **1.475-200** | 0.649912 | 10.00895 | 0.499513 | 3.43% |
| **1.475-220** | 0.649461 | 9.156653 | 0.512148 | 3.22% |
| **1.475-240** | 0.652874 | 10.01075 | 0.513918 | 3.55% |
| **1.50-200** | 0.645778 | 9.52388 | 0.474326 | 3.04% |
| **1.50-220** | 0.64376 | 9.510526 | 0.512694 | 3.27% |
| **1.50-240** | 0.642209 | 9.255926 | 0.471912 | 2.92% |
| **1.525-200** | 0.62977 | 8.221115 | 0.435112 | 2.36% |
| **1.525-220** | 0.638835 | 9.350547 | 0.477987 | 2.99% |
| **1.525-240** | 0.652446 | 9.43345 | 0.506419 | 3.26% |
| **1.525-260** | 0.650172 | 9.604094 | 0.510057 | 3.34% |
| **1.525-280** | 0.636679 | 8.704521 | 0.515952 | 2.99% |

For all samples, the Photon Intensity (PI) was 108.1 mW and the irradiating area was 0.7 cm².

Sample Numbers refer to the NTA/Cd ratio and CBD times shown in TABLE 1.

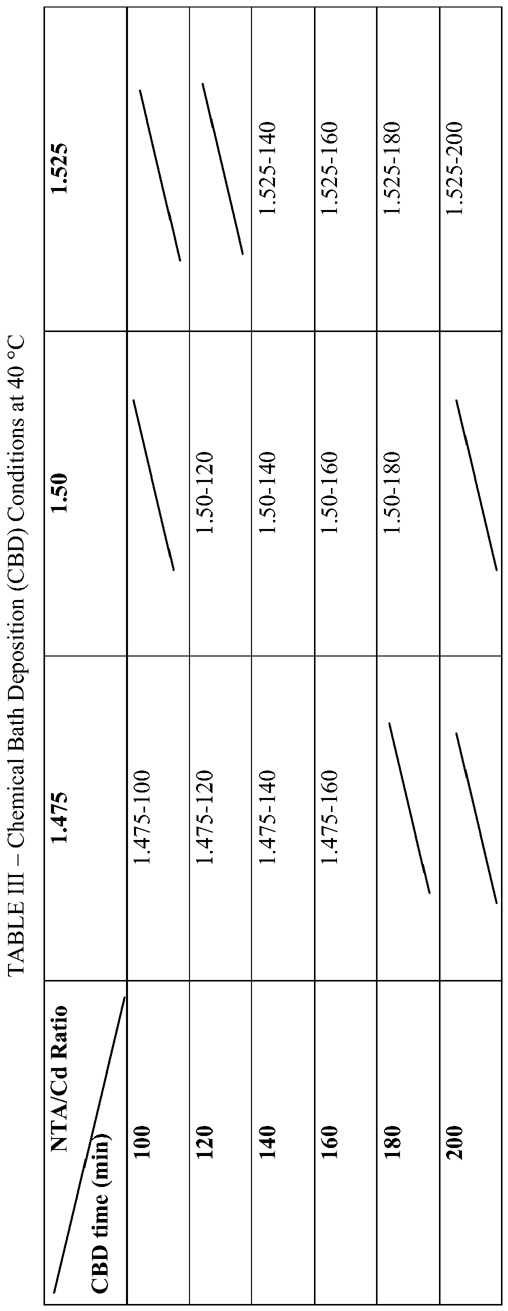

**Table IV -I-V (current-voltage) testing for the cells - CBD at 40°C**

| **Dev ID** | **Voc (V)** | **Jsc (mA/cm²)** | **FF** | **h (%)** |
|---|---|---|---|---|
| 1.475-100 | 0.679952 | 9.226913 | 0.479489 | 3.01% |
| 1.475-120 | 0.661445 | 10.7736 | 0.488172 | 3.48% |
| 1.475-140 | 0.648785 | 11.51133 | 0.510687 | 3.82% |
| 1.475-160 | 0.636891 | 11.2711 | 0.524919 | 3.77% |
| 1.50-120 | 0.661917 | 9.705739 | 0.491384 | 3.16% |
| 1.50-140 | 0.654978 | 10.9947 | 0.50865 | 3.67% |
| 1.50-160 | 0.650923 | 11.07797 | 0.482954 | 3.49% |
| 1.50-180 | 0.625029 | 11.16998 | 0.522302 | 3.65% |
| 1.525-140 | 0.654807 | 10.30032 | 0.469631 | 3.17% |
| 1.525-160 | 0.6445 | 11.19467 | 0.50851 | 3.67% |
| 1.525-180 | 0.628613 | 11.85703 | 0.515273 | 3.84% |
| 1.525-200 | 0.625994 | 11.33996 | 0.518008 | 3.68% |

For all samples, the Photon Intensity (PI) was 113.1 mW and the irradiating area was 0.7 cm². Sample Numbers refer to the NTA/Cd ratio and CBD times shown in TABLE III.

## Claims

1. A method of preparing CdSe quantum dot sensitizers on a substrate comprising:
forming a TiO₂ layer on a substrate electrode;
forming quantum dots on the TiO₂ layer by a chemical deposition process comprising;
exposing the TiO₂ coated layer to a solution of a metal complexing agent complexed with Cd and a selenium source for a period of time and at a temperature sufficient to form CdSe-quantum dots on the TiO₂ layer.

2. The method of claim 1 wherein the substrate is glass or a transparent flexible polymer and the substrate electrode includes fluorine-doped tin dioxide, tin-doped indium oxide, or aluminum-doped zinc Oxide.

3. The method of claim 1 or 2 wherein the flexible substrate is poly(ethylene terephthalate) coated with tin-doped indium oxide (PET-ITO) or poly(ethylene naphthalate) coated with tin-doped indium oxide (PEN-ITO).

4. The method of claim 1 wherein the TiO₂ layer is a patterned layer formed from a TiO₂ paste with an acid additive.

5. The method of claim 1 wherein the chemical deposition is carried out in a chemical deposition solution comprising potassium aminotriacetate [N(CH₂COOK)₃; NTA] and Cd²⁺.

6. The method of claim 5 wherein the ratio of NTA to Cd²⁺ is between 1 and 2.

7. The method of claim 1 wherein the selenium source in the chemical deposition solution comprises sodium selenosulfate

8. The method of claim 1 wherein the temperature for the formation of the CdSe-quantum dots is between 5°C and 50°C and wherein the time for the formation of the CdSe-quantum dots is between 100 and 280 minutes.

9. A device comprising:
TiO₂ layer on a substrate electrode;
quantum dots on the TiO₂ layer that have been chemically deposited by exposing the TiO₂ coated layer to a solution of a metal complexing agent complexed with Cd and a selenium source for a period of time and at a temperature sufficient to form CdSe-quantum dots on the TiO₂ layer.

10. The device of claim 9 wherein the quantum dots have been chemically deposited by exposing the TiO₂ coated layer to a solution of a metal complexing agent comprising potassium aminotriacetate complexed with cadmium.

11. The device of claim 9 or 10 further comprising a counter electrode and an electrolyte.

12. The device of claim 11 wherein the counter electrode is flexible and transparent.
